# EUROPÄISCHE PATENTSCHRIFT

(11) **EP 1 118 785 B1**
(45) Veröffentlichungstag und Bekanntmachung des Hinweises auf die Patenterteilung: **02.11.2006**
(21) Anmeldenummer: 01100236.7
(22) Anmeldetag: 03.01.2001
(51) Int. Cl.: F16D 3/18

(54) **Einrichtung zum Verbinden einer Gelenkwelle mit einem Antriebszapfen einer anzutreibenden Walze**
Device for connecting a transmission shaft with a driving shaft for a driven shaft of a roll
Dispositif pour connecter un arbre de transmission avec un tourillon d'un arbre entraîné d'un rouleau

(30) Priorität: 18.01.2000 DE 10001858
(43) Veröffentlichungstag der Anmeldung: 25.07.2001
(73) Patentinhaber: Voith Patent GmbH, 89522 Heidenheim (DE)
(72) Erfinder: Beisiegel, Diethelm, 89547 Gerstetten (DE)

(56) Entgegenhaltungen:
- DE-A- 1 902 665
- DE-U- 29 909 271
- US-A- 3 126 722
- US-A- 3 299 670

## Beschreibung

Die Erfindung betrifft eine Gelenkwelle mit Einrichtung zum Verbinden dieser Gelenkwelle mit einem Antriebszapfen einer insbesondere in einer Papiermaschine eingesetzten anzutreibenden Walze. Eine solche Einrichtung ist beispielsweise aus der DE-OS 1 902 665 bekannt.

Auswechselbare angetriebene Walzen von Papiermaschinen werden bisher in der Regel dadurch mit einer jeweiligen Gelenkwelle gekoppelt, daß zwischen dieser Gelenkwelle und dem Antriebszapfen vorgesehene Koppelelemente miteinander verschraubt werden (vgl. DE-OS 1 902 665). Das Montieren und Lösen der betreffenden Gelenkwellen-Flanschverbindungen ist mit einem hohen Montage- und entsprechend einem hohen Zeitaufwand verbunden. Bei jedem Walzenwechsel muß die Schraubverbindung montiert bzw. demontiert werden. Ergeben sich in der Siebpartie aufgrund der Maschinenkonstruktion beim Siebwechsel größere Abschwenkwege, so ist auch hier ein entsprechend montage- und zeitaufwendiges Abkuppeln der betreffenden Gelenkwelle erforderlich.

Ziel der Erfindung ist es, eine Gelenkwelle mit Einrichtung der eingangs genannten Art zu schaffen, bei der die zuvor genannten Nachteile beseitigt und die Walzenwechselzeiten auf ein Minimum herabgesetzt sind.

Diese Aufgabe wird nach der Erfindung gelöst durch eine Schnellkuppelverbindung mit einem außenverzahnten und einem innenverzahnten Koppelelement, von denen eines an der Gelenkwelle fixiert ist und das andere an dem Antriebszapfen der anzutreibenden Walze fixierbar ist, wobei die beiden Koppelelemente zur Herstellung der Verbindung axial zusammensteckbar sind, wobei die beiden Koppelelemente nach erfolgter Verbindung durch eine Federkraft miteinander in Eingriff gehalten sind. Die Federkraft ist vorzugsweise durch wenigstens eine in der Gelenkwelle integrierte Feder erzeugt, die zwischen zwei relativ zueinander verschiebbaren Teilen der teleskopartig ausgeführten Gelenkwelle angeordnet ist, von denen eines mit dem betreffenden Koppelelement verbunden ist.

Erfindungsgemäß ist die durch die beiden Koppelelemente hergestellte Verbindung entgegen der Federkraft mittels einer in der Gelenkwelle integrierten Zylinder/Kolben-Einheit lösbar. Die Zylinder/Kolben-Einheit ist vorzugsweise zwischen zwei relativ zueinander verschiebbaren Teilen der teleskopartig ausgeführten Gelenkwelle angeordnet, von denen eines mit dem betreffenden Koppelelement verbunden ist.

Aufgrund dieser Ausbildung sind wesentlich kürzere Walzenwechselzeiten möglich. Während ein Walzenwechsel bei einer herkömmlichen Einrichtung etwa 45 bis 60 Minuten dauerte, ist nunmehr ein Walzenwechsel in einer Zeit von beispielsweise etwa 10 bis etwa 15 Minuten möglich. Überdies ist ein schnellerer Siebwechsel bei größeren Abschwenkwegen gewährleistet. Mit dem Wegfall der bisher üblichen Schraubverbindungen ist insbesondere auch eine Bedienung durch nur eine einzige Person möglich.

Aus der DE 299 09 271 U1 ist zwar bereits eine Gelenkwelle mit zugeordneter Schnellösekupplung bekannt. Außen- bzw. innenverzahnte Koppelelemente sind jedoch auch hier nicht vorgesehen.

Bei einer zweckmäßigen praktischen Ausführungsform der erfindungsgemäßen Einrichtung ist das die Außenverzahnung aufweisende Koppelelement an der Gelenkwelle und das die Innenverzahnung aufweisende Koppelelement an dem Antriebszapfen der anzutreibenden Walze, beispielsweise Obersiebleitwalze, fixierbar.

Um ein einfaches Ein- und Ausrücken zu ermöglichen, können die Verzahnungen jeweils mit einer Rilsanbeschichtung versehen sein.

Um ein Abwinkeln des Gelenkkopfes in der Ausbaustellung zu verhindern, ist vorzugsweise ein insbesondere zweiteiliger Aufnahmering vorgesehen, der die Führung des Gelenkkopfes übernimmt, bevor die Verzahnungen getrennt werden. Das Vorhandensein eines Aufnahmeringes, der wieder Teil einer Ein- und Ausbauvorrichtung für die Gelenkwelle sein kann, ist insbesondere im Rahmen der Automatisierung der Gelenkwellen-Schnellkupplung von entscheidender Bedeutung.

Bei einer zweckmäßigen praktischen Ausführungsform der erfindungsgemäßen Einrichtung ist der Aufnahmering vorgesehen, um den auf der Seite des betreffenden Koppelelements vorgesehenen Gelenkkopf der Gelenkwelle bei einem jeweiligen Walzenwechsel aufzunehmen.

In den Unteransprüchen sind weitere vorteilhafte Ausführungsformen angegeben.

Die Erfindung wird im folgenden anhand eines Ausführungsbeispiels unter Bezugnahme auf die Zeichnung näher erläutert; in dieser zeigen:
- Figur 1: eine schematische, teilweise geschnittene Darstellung einer über eine entsprechende Einrichtung mit einem Antriebszapfen einer anzutreibenden Walze, beispielsweise Obersiebleitwalze, verbindbaren Gelenkwelle, wobei die Verbindungseinrichtung eine offene Stellung einnimmt, und
- Figur 2: eine schematische, teilweise geschnittene Darstellung der Anordnung gemäß Figur 1, wobei die Verbindungseinrichtung eine geschlossene Stellung einnimmt.

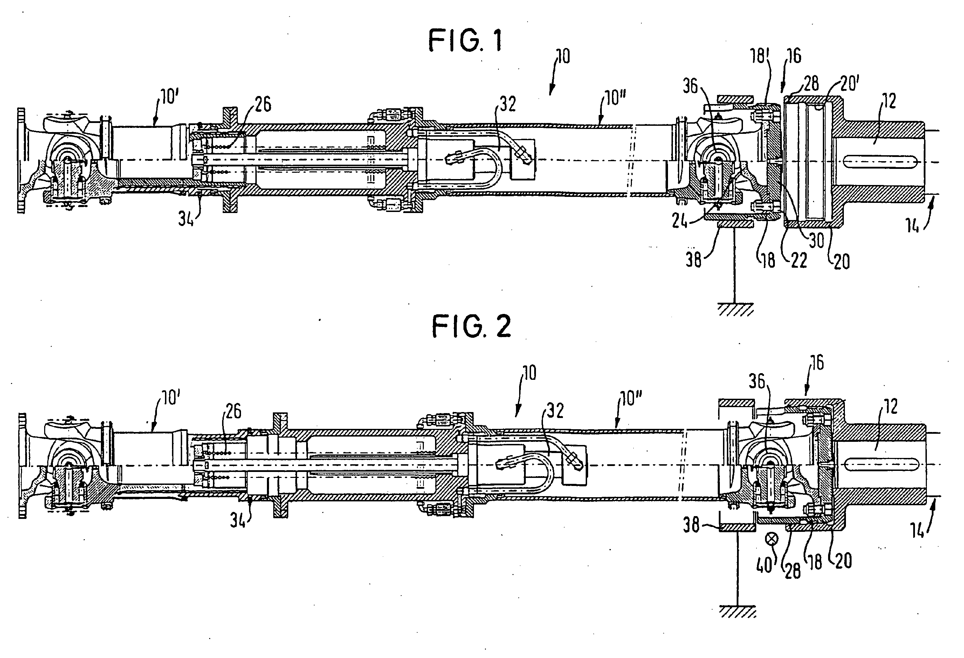

Die Figuren 1 und 2 zeigen in schematischer, teilweise geschnittener Darstellung eine Einrichtung zum Verbinden einer Gelenkwelle 10 mit einem Antriebszapfen 12 einer insbesondere in einer Papiermaschine eingesetzten anzutreibenden Walze 14.

Die Verbindungseinrichtung umfaßt eine Schnellkoppelverbindung 16 mit einem außenverzahnten und einem innenverzahnten Koppelelement 18 bzw. 20, von denen eines an der Gelenkwelle 10 und das andere an dem Antriebszapfen 12 der anzutreibenden Walze 14 fixierbar ist. Beim vorliegenden Ausführungsbeispiel ist das die Außenverzahnung 18' aufweisende Koppelelement 18 an der Gelenkwelle 10 und das die Innenverzahnung 20' aufweisende Koppelelement 20 an dem Antriebszapfen 12 der anzutreibenden Walze 14 fixierbar.

Das als Gelenkwellenflansch vorgesehene Koppelelement 18 kann über Schrauben 22 mit dem Gelenkwellenflanschmitnehmer 24 verbunden sein. Das die Innenverzahnung 20' aufweisende Koppelelement 20 ist als auf dem Antriebszapfen 12 montierte Gegenflanschglocke vorgesehen.

In Figur 1 nimmt die Schnellkoppelverbindung 16 eine offene Stellung ein, in der die beiden Koppelelemente 18, 20 noch außer Eingriff sind. Dagegen ist die Schnellkoppelverbindung 16 in der Figur 2 in ihrer geschlossenen Stellung gezeigt, in der die beiden außen- bzw. innenverzahnten Koppelelemente 18, 20 axial zusammengesteckt sind und über die Verzahnungen 18', 20' entsprechend miteinander in Eingriff stehen. Ein jeweiliges Antriebsdrehmoment kann somit über die Verzahnungen 18', 20' auf die Walze 14 übertragen werden.

Beim vorliegenden Ausführungsbeispiel sind die beiden Koppelelemente 18, 20 nach erfolgter Verbindung durch Federkraft miteinander in Eingriff gehalten. Diese Federkraft ist im vorliegenden Fall durch eine in der Gelenkwelle 10 integrierte Feder 26 erzeugt, die hier als Druckfeder vorgesehen ist. Diese Druckfeder 26 ist zwischen zwei relativ zueinander verschiebbaren Teilen 10', 10" der teleskopartig ausgeführten Gelenkwelle 10 angeordnet. Dabei ist das der Gelenkwelle 10 zugeordnete Koppelelement 18 mit dem in den Figuren 1 und 2 rechten Teil 10" der Gelenkwelle 10 verbunden.

Durch die in der Gelenkwelle 10 eingebaute Druckfeder 26 ist somit eine sichere Verbindung der Verzahnung gewährleistet. Dabei kann die Druckfeder 26 eine Vorspannkraft von beispielsweise etwa 2190 Newton besitzen.

Um ein einfaches Ein- bzw. Ausrücken zu ermöglichen, können die Verzahnungen 18', 20' jeweils mit einer Rilsanbeschichtung versehen sein.

Zum Schutz gegen Schmutzwasser kann die Verzahnung 18', 20' durch eine Dichtung 28 geschützt sein. Durch eine Anlaufscheibe 30 aus Polyamid kann der Anschlag von Metall gegen Metall verhindert werden.

Die durch die beiden Koppelelemente 18, 20 hergestellte Verbindung ist entgegen der Kraft der Druckfeder 26 mittels einer in die Gelenkwelle 10 eingebauten Zylinder/Kolben-Einheit 32 lösbar. Diese Zylinder/Kolben-Einheit 32 ist zwischen den beiden relativ zueinander verschiebbaren Teilen 10', 10" der teleskopartig ausgeführten Gelenkwelle 10 angeordnet.

Die Zylinder/Kolben-Einheit 32 kann beispielsweise einen Hydraulikzylinder (z.B. 250 bar) umfassen, der über einen Stellweg von beispielsweise 140 mm der Druckfeder 26 entgegenwirkt. In der in der Figur 1 dargestellten offenen Stellung der Schnellkuppelverbindung 16 kann die Druckfeder 26 beispielsweise mit etwa 2440 N vorgespannt sein.

Um während des Betriebs sicherzustellen, daß keine Axialkräfte übertragen werden, können die jeweilige Druck- und die jeweilige Saugseite des Zylinders über ein Kupplungsstück miteinander verbunden werden. Die Druckentlastung im Verschiebeteil kann über ein Entlüftungsventil 34 erfolgen. Dabei kann beispielsweise ein Ventil der Marke "Voith Turbo Safeset ^{®}" verwendet werden. Zum Nachschmieren des Keilwellenprofils kann ein Schmiernippel vorgesehen sein.

Um ein Abwinkeln des auf der Seite des betreffenden Koppelelements 18 vorgesehenen Gelenkkopfes 36 der Gelenkwelle 10 in der Ausbaustellung zu verhindern, ist ein Aufnahmering 38 vorgesehen, der die Führung des Gelenkkopfes 36 übernimmt, bevor die Verzahnungen 18', 20' getrennt werden. Dieser vorzugsweise zweiteilige Aufnahmering 38 kann bei der Erstmontage über Spindeln eingestellt werden und über eine Konsole mit der Maschinenstuhlung verbunden sein. Bei einem jeweiligen Walzenwechsel wird der Gelenkkopf 36 der Gelenkwelle 10 in diesem Aufnahmering 38 geparkt. Nach der Entlastung der vorzugsweise einen Hydraulikzylinder umfassenden Zylinder/Kolben-Einheit 32 kann er über die Druckfeder 26 wieder eingerückt werden.

Um die Lage des Gelenkkopfes 36 festzustellen, kann zwischen dem Aufnahmering 38 und dem als Gegenflanschglocke vorgesehenen Koppelelement 20 ein beispielsweise optischer und/oder induktiver Endschalter 40 (vgl. insbesondere Figur 2) vorgesehen sein.

### Bezugszeichenliste

- 10: Gelenkwelle
- 10': Gelenkwellenteil
- 10": Gelenkwellenteil
- 12: Antriebszapfen '
- 14: Walze
- 16: Schnellkuppelverbindung
- 18: außenverzahntes Koppelelement
- 18': Außenverzahnung
- 20: innenverzahntes Koppelelement
- 20': Innenverzahnung
- 22: Schrauben
- 24: Gelenkwellenflanschmitnehmer
- 26: Druckfeder
- 28: Dichtung
- 30: Anlaufscheibe
- 32: Zylinder/Kolben-Einheit
- 34: Entlüftungsventil
- 36: Gelenkkopf
- 38: Aufnahmering
- 40: Endschalter

## Patentansprüche

1. Gelenkwelle mit Einrichtung zum Verbinden dieser Gelenkwelle (10) mit einem Antriebszapfen (12) einer insbesondere in einer Papiermaschine eingesetzten anzutreibenden Walze (14),
**gekennzeichnet durch**
eine Schnellkuppelverbindung (16) mit einem außenverzahnten und einem innenverzahnten Koppelelement (18 bzw. 20), von denen eines an der Gelenkwelle (10) fixiert ist und das andere an dem Antriebszapfen (12) der anzutreibenden Walze (14) fixierbar ist, wobei die beiden Koppelelemente (18, 20) zur Herstellung der Verbindung axial zusammensteckbar sind, wobei die beiden Koppelelemente (18, 20) nach erfolgter Verbindung **durch** eine Federkraft miteinander in Eingriff gehalten sind und die **durch** die beiden Koppelelemente (18, 20) hergestellte Verbindung entgegen der Federkraft mittels einer in der Gelenkwelle (10) integrierten Zylinder/Kolben-Einheit (32) lösbar ist.

2. Gelenkwelle mit Einrichtung nach Anspruch 1,
**dadurch gekennzeichnet,**
**dass** das die Außenverzahnung (18') aufweisende Koppelelement (18) an der Gelenkwelle (10) fixiert ist und das die Innenverzahnung (20') aufweisende Koppelelement (20) an dem Antriebszapfen (12) der anzutreibenden Walze (14) fixierbar ist.

3. Gelenkwelle mit Einrichtung nach Anspruch 1 oder 2,
**dadurch gekennzeichnet,**
**dass** die Federkraft durch wenigstens eine in der Gelenkwelle (10) integrierte Feder (26) erzeugt ist, die zwischen zwei relativ zueinander verschiebbaren Teilen (10', 10") der teleskopartig ausgeführten Gelenkwelle (10) angeordnet ist, von denen eines mit dem betreffenden Koppelelement (18) verbunden ist.

4. Gelenkwelle mit Einrichtung nach einem der Ansprüche 1 bis 3,
**dadurch gekennzeichnet,**
**dass** die Zylinder/Kolben-Einheit (32) zwischen zwei relativ zueinander verschiebbaren Teilen (10', 10") der teleskopartig ausgeführten Gelenkwelle (10) angeordnet ist, von denen eines mit dem betreffenden Koppelelement (18, 20) verbunden ist.

5. Gelenkwelle Einrichtung nach einem der vorhergehenden Ansprüche,
**dadurch gekennzeichnet,**
**dass** die Verzahnungen (18', 20') jeweils mit einer Rilsanbeschichtung versehen sind.

6. Gelenkwelle mit Einrichtung nach einem der vorhergehenden Ansprüche,
**dadurch gekennzeichnet,**
**dass** ein vorzugsweise zweiteiliger Aufnahmering (38) vorgesehen ist, der die Führung des Gelenkkopfes übernimmt, bevor die Verzahnungen getrennt werden.

7. Gelenkwelle mit Einrichtung nach Anspruch 8,
**dadurch gekennzeichnet,**
**dass** der Aufnahmering (38) vorgesehen ist, um den auf der Seite des betreffenden Koppelelementes (18) vorgesehenen Gelenkkopf (36) der Gelenkwelle (10) bei einem jeweiligen Walzenwechsel aufzunehmen.

8. Gelenkwelle mit Einrichtung nach einem der vorhergehenden Ansprüche,
**dadurch gekennzeichnet,**
**dass** die beiden Koppelelemente (18, 20) miteinander in Eingriff haltende Federkraft durch eine Druckfeder (26) erzeugt ist, die eine Vorspannkraft von insbesondere etwa 2000 bis etwa 2300 N und von vorzugsweise etwa 2190 Newton besitzt.

9. Gelenkwelle mit Einrichtung nach einem der vorhergehenden Ansprüche,
**dadurch gekennzeichnet,**
**dass** die Zylinder/Kolben-Einheit (32) einen Hydraulikzylinder von z.B. etwa 250 bar umfasst, der über einen Stellweg von insbesondere etwa 100 bis etwa 200 mm und vorzugsweise etwa 140 mm der Druckfeder (26) entgegenwirkt.

10. Gelenkwelle mit Einrichtung nach einem der vorhergehenden Ansprüche,
**dadurch gekennzeichnet,**
**dass** die Druckfeder (26) in der offenen Stellung der Schnellkuppelverbindung (16) insbesondere mit etwa 2200 bis etwa 2600 N und vorzugsweise mit etwa 2440 N vorgespannt ist.

11. Gelenkwelle mit Einrichtung nach einem der vorhergehenden Ansprüche,
**dadurch gekennzeichnet,**
**dass** die Druckentlastung im Verschiebeteil über ein Entlüftungsventil (34) erfolgt.

12. Gelenkwelle mit Einrichtung nach einem der vorhergehenden Ansprüche,
**dadurch gekennzeichnet,**
**dass** die Verzahnung (18', 20') durch eine Dichtung (28) gegen Spritzwasser geschützt ist.

13. Gelenkwelle mit Einrichtung nach einem der vorhergehenden Ansprüche,
**dadurch gekennzeichnet,**
**dass** zwischen dem Aufnahmering (38) und der Gegenflanschglocke ein vorzugsweise optischer und/oder induktiver Endschalter vorgesehen ist, um die Lage des betreffenden Gelenkkopfes (36) festzustellen.

14. Gelenkwelle mit Einrichtung nach einem der vorhergehenden Ansprüche,
**dadurch gekennzeichnet,**
**dass** eine Anlaufscheibe (30) aus Polyamid vorgesehen ist, um einen Anschlag von Metall gegen Metall zu verhindern.

## Claims

1. Articulated shaft having a device for connecting the said articulated shaft (10) to a drive journal (12) of a roll (14) which is to be driven and is used, in particular, in a paper machine, **characterized by** a quick-coupling connection (16) having a coupling element (18) with an external toothing system and a coupling element (20) with an internal toothing system, of which one is fixed to the articulated shaft (10) and the other can be fixed to the drive journal (12) of the roll (14) which is to be driven, it being possible for the two coupling elements (18, 20) to be plugged together axially in order to produce the connection, the two coupling elements (18, 20) being held in engagement with one another by a spring force after connection has taken place, and it being possible for the connection which is produced by the two coupling elements (18, 20) to be released counter to the spring force by means of a cylinder/piston unit (32) which is integrated into the articulated shaft (10).

2. Articulated shaft having a device according to Claim 1, **characterized in that** the coupling element (18) which has the external toothing system (18') is fixed to the articulated shaft (10) and the coupling element (20) which has the internal toothing system (20') can be fixed to the drive journal (12) of the roll (14) which is to be driven.

3. Articulated shaft having a device according to Claim 1 or 2, **characterized in that** the spring force is produced by at least one spring (26) which is integrated into the articulated shaft (10) and is arranged between two parts (10', 10"), which can be displaced relative to one another, of the telescopically configured articulated shaft (10), of which one is connected to the relevant coupling element (18).

4. Articulated shaft having a device according to one of Claims 1 to 3, **characterized in that** the cylinder/piston unit (32) is arranged between two parts (10', 10"), which can be displaced relative to one another, of the telescopically configured articulated shaft (10), of which one is connected to the relevant coupling element (18, 20).

5. Articulated shaft having a device according to one of the preceding claims, **characterized in that** the toothing systems (18', 20') are provided in each case with a Nylon 11 coating.

6. Articulated shaft having a device according to one of the preceding claims, **characterized in that** a preferably two-piece holding ring (38) is provided which assumes the guidance of the articulation head before the toothing systems are disconnected.

7. Articulated shaft having a device according to Claim 8, **characterized in that** the holding ring (38) is provided in order to hold that articulation head (36) of the articulated shaft (10) which is provided on the side of the relevant coupling element (18) during a respective roll change.

8. Articulated shaft having a device according to one of the preceding claims, **characterized in that** spring force which holds the two coupling elements (18, 20) in engagement with one another is produced by a compression spring (26) which has a prestressing force of, in particular, from approximately 2000 to approximately 2300 N and of preferably approximately 2190 N.

9. Articulated shaft having a device according to one of the preceding claims, **characterized in that** the cylinder/piston unit (32) comprises a hydraulic cylinder of, for example, approximately 250 bar, which counteracts the compression spring (26) over an actuating path of, in particular, from approximately 100 to approximately 200 mm and of preferably approximately 140 mm.

10. Articulated shaft having a device according to one of the preceding claims, **characterized in that**, in the open position of the quick-coupling connection (16), the compression spring (26) is prestressed, in particular, with from approximately 2200 to approximately 2600 N and preferably with approximately 2440 N.

11. Articulated shaft having a device according to one of the preceding claims, **characterized in that** the pressure relief in the displacement part takes place via a venting valve (34).

12. Articulated shaft having a device according to one of the preceding claims, **characterized in that** the toothing system (18', 20') is protected against spray water by a seal (28).

13. Articulated shaft having a device according to one of the preceding claims, **characterized in that** a preferably optical and/or inductive limit switch is provided between the holding ring (38) and the corresponding flange bell, in order to determine the position of the relevant articulation head (36).

14. Articulated shaft having a device according to one of the preceding claims, **characterized in that** a stop disc (30) made from polyamide is provided, in order to prevent impact of metal against metal.

## Revendications

1. Arbre articulé avec dispositif pour relier cet arbre articulé (10) à un tourillon d'entraînement (12) d'un rouleau (14) à entraîner et inséré en particulier dans une machine à papier,
**caractérisé par**
une liaison à raccord rapide (16) avec un élément de couplage à denture extérieure et un élément de couplage à denture intérieure (18 ou 20), dont l'un est fixé sur l'arbre articulé (10) et l'autre peut être fixé sur le tourillon d'entraînement (12) du rouleau (14) à entraîner, les deux éléments de couplage (18, 20) pouvant être emboîtés axialement pour l'établissement de la liaison, les deux éléments de couplage (18, 20) étant maintenus en prise entre eux par une force de ressort une fois la liaison effectuée et la liaison établie par les deux éléments de couplage (18, 20) pouvant être détachée dans le sens contraire à la force de ressort au moyen d'une unité cylindre/piston (32) intégrée dans l'arbre articulé (10).

2. Arbre articulé avec dispositif selon la revendication 1,
**caractérisé en ce que**
l'élément de couplage (18) présentant la denture extérieure (18') est fixé sur l'arbre articulé (10) et l'élément de couplage (20) présentant la denture intérieure (20') peut être fixé sur le tourillon d'entraînement (12) du rouleau (14) à entraîner.

3. Arbre articulé avec dispositif selon la revendication 1 ou 2,
**caractérisé en ce que** la force de ressort est générée par au moins un ressort (26) intégré dans l'arbre articulé (10), qui est disposé entre deux parties (10', 10") pouvant coulisser l'une par rapport à l'autre de l'arbre articulé (10) réalisé de façon télescopique, dont l'une est reliée à l'élément de couplage (18) concerné.

4. Arbre articulé avec dispositif selon l'une quelconque des revendications 1 à 3,
**caractérisé en ce que**
l'unité cylindre/piston (32) est disposée entre deux parties (10', 10") pouvant coulisser l'une par rapport à l'autre de l'arbre articulé (10) réalisé de façon télescopique, dont l'une est reliée à l'élément de couplage (18, 20) concerné.

5. Arbre articulé avec dispositif selon l'une quelconque des revendications précédentes,
**caractérisé en ce que**
les dentures (18', 20') sont dotées chacune d'un revêtement de Rilsan.

6. Arbre articulé avec dispositif selon l'une quelconque des revendications précédentes,
**caractérisé en ce que**
une bague de réception (38) de préférence en deux parties est prévue, laquelle assume le guidage de la tête d'articulation, avant que les dentures soient séparées.

7. Arbre articulé avec dispositif selon la revendication 8,
**caractérisé en ce que**
la bague de réception (38) est prévue pour recevoir la tête d'articulation (36) prévue sur le côté de l'élément de couplage (18) concerné, de l'arbre articulé (10) lors d'un changement de rouleau concerné.

8. Arbre articulé avec dispositif selon l'une quelconque des revendications précédentes,
**caractérisé en ce que**
la force de ressort maintenant en prise les deux éléments de couplage (18, 20) entre eux est générée par un ressort de pression (26), qui présente une force de pré-tension de en particulier environ 2.000 à environ 2.300 N et de préférence environ 2.190 Newtons.

9. Arbre articulé avec dispositif selon l'une quelconque des revendications précédentes,
**caractérisé en ce que**
l'unité de cylindre/piston (32) comprend un cylindre hydraulique de par exemple environ 250 bars, qui agit dans le sens contraire au ressort de pression (26) au moyen d'une course de positionnement de en particulier environ 100 à environ 200 mm et de préférence environ 140 mm.

10. Arbre articulé avec dispositif selon l'une quelconque des revendications précédentes,
**caractérisé en ce que**
le ressort de pression (26) est pré-tendu dans la position ouverte de la liaison à raccord rapide (16) en particulier avec environ 2.200 à environ 2.600 N et de préférence avec environ 2.440 N.

11. Arbre articulé avec dispositif selon l'une quelconque des revendications précédentes,
**caractérisé en ce que**
la décharge de pression dans la partie de coulissement s'effectue au moyen d'une vanne de purge (34).

12. Arbre articulé avec dispositif selon l'une quelconque des revendications précédentes,
**caractérisé en ce que**
la denture (18', 20') est protégée par un joint (28) contre les projections d'eau.

13. Arbre articulé avec dispositif selon l'une quelconque des revendications précédentes,
**caractérisé en ce que**,
entre la bague de réception (38) et la cloche à contre-bride, il est prévu un interrupteur fin de course de préférence optique et/ou inductif, afin de bloquer la position de la tête d'articulation (36) concernée.

14. Arbre articulé avec dispositif selon l'une quelconque des revendications précédentes,
**caractérisé en ce que**
une rondelle de butée (30) en polyamide est prévue pour empêcher une butée de métal contre métal.
